# EUROPEAN PATENT APPLICATION

(11) **EP 4 498 307 A1**
(43) Date of publication of application: **29.01.2025**
(21) Application number: 23187840.6
(22) Date of filing: 26.07.2023
(51) Int. Cl.: G06Q 10/10, G06Q 30/015, G06Q 30/02

(54) **PROVIDING PERSONAL INFORMATION TO AN APPLICATION**

(71) Applicant: Siemens Aktiengesellschaft, 80333 München (DE)
(72) Inventor: Johnson, Rebecca, 81739 München (DE); Singh, Saurabh Narayan, 81739 München (DE)
(74) Representative: Siemens Patent Attorneys

(57) **Abstract**

Applications should be easier to personalize. Therefore, there is suggested a method of providing a personal information unit to an application (2) by providing a schema (1) including a basic set (3) of data fields (6), each data field (6) being provided for a field specific type of information about a person. At least a part of the data fields (6) is filled with one or more respective personal information units of the person. The schema (1) is automatically asked for one of the field-specific types of information about the person by the application (2). A respective one of the personal information units of the person is automatically transmitted to the application (2) from the schema (1).

## Description

The present invention relates to a method of providing a personal information unit to an application. Furthermore, the present invention relates to a system for providing a personal information unit to an application.

User data is being created every time a user uses a website, application or provides information about themselves via a questionnaire. All interactions, whether via mouse clicks, audio responses or playing games are generating data related to the user. This data can then be used to provide personalized recommendations to the user based on a curated user profile. Within extended reality applications, there is even more user related data being generated. For example, the eye movement of user, the behavior patterns and how does a user react to a certain stimuli and situation. All this data is usually collected across different applications based on the cookies via other data collection and processing tools.

Every time an application needs to create a user persona, they must combine their own requirements and recommendations with various data sets fetched from the user information database. This increases the threshold of effort needed to create a user profile. And in use cases with higher personalization and immersiveness, for example a metaverse use case where user personality is at the fore, creating these user profiles at the beginning can be quite challenging.

As of now, there is no standard solution for this problem and the problem itself has not been identified. Current digital assistants have no personality, lack empathy, and remain neutral which creates a less desirable robotic experience. Manually entering a prose person's backstory in Generative AI (artificial intelligence) engines such as ChatGPT enable the required elevation.

The object of the present invention is to simplify the personalization of applications. Furthermore, a respective system shall be provided.

According to the present invention this object is solved by a method and a system according to the independent claims. Favorable further developments are defined in the subclaims.

Accordingly, there is suggested a method of providing a personal information unit to an application. A personal information unit is any data, which characterizes a person, for example age or favorite color of the person. This information shall be provided to an application which has to be personalized. Such application may include digital companions or agents. The application may be used by online sellers, social media, games etc.

A first step of the method includes providing a schema including a (first) basic set of data fields, each field being provided for a field specific type of information about a person. Preferably, the schema is a standard set of data fields. Thus, the schema can be regarded e.g. as Personality Descriptor Mark-Up Language (PDML). The PDML enables users to provide personal information in a standard fashion. Thus, the advantage of the PDML is that personal information becomes pluggable.

In a further step of the inventive method at least a part of the data fields is filled with one or more respective personal information units of the person (general type of person). By using the data fields the total personal information obtains a specific structure. This structure can be regarded as language (PDML). It is not necessary, that the complete basic set of data fields is filled up with personal information units. The basic set of data fields may remain partly filled or may be filled little by little.

In a further step of the inventive method the application automatically asks the schema for one of the field specific types of information about the person. Through this the application tries to get personalized. In other words, the application accesses the schema in order to obtain data from the person. The type of information characterizes the content or semantic of the information. For instance, the type of information is the name, the age, the reaction velocity or the like. For example, the application asks the schema for the name of the person. In a subsequent step of the method a respective one of the personal information units of the person (here the actual name) is automatically transmitted to the application from the schema, the field specific type of which personal information unit is asked for. This means that if the application asks for the name of the person, the schema or another interface responses by transmitting the name of the person to the application. This means that the application receives the information it has asked for. The application may also ask for a plurality of types of information. All respective personal information units may be transmitted simultaneously.

By using a specific basic set of data fields for providing the personal information, a mostly standardized user profile may be created. Due to the field specific information there can be provided a structured database which can be more easily searched by APIs (Application Programming Interface).

In a favorable embodiment the application includes a digital assistant and a reaction of the digital assistant to an input of the person depends on the one personal information unit received by the digital assistant from the schema. This means, that a digital assistant is personalized and shows a person specific reaction when the person interacts with the application. For instance, the digital assistant is personalized by the age of the person. In this case the personal assistant may suggest movies which are released for the respective age.

In another embodiment, the personal information units required for filling at least a part of the data fields are (automatically) obtained from one or more personality models. The data fields may be filled manually or automatically. For example, a specific personality model delivers the personal information in a format adapted to the basic set of data fields. In other words, the personality model may use a standard personality language. The personality model may be Myers-Briggs-model or simply a zodiac-sign-model. For example, the data fields are filled depending on the zodiac sign of the person. Beside the Myers-Briggs-model any other psychological type indicator can be used for gathering the personal information.

According to a further embodiment, the schema comprises a situation specific set of data fields, and the situation specific set of data fields (second set of data fields) is at least partly filled by personal information units gathered by an automatic questionnaire or an automatic analysis of interactions of the person with the application and/or another application. This means that beside the first (basic) set of data fields, there is provided a second set of data fields which can be used for situation specific information, whereas the first set of data fields may be used for basic personal information units received from the personality model (general type of person). The situation specific set of data fields may include information of the person related to a situation specific response (SSR). For example, an automatic questionnaire requests information how the person would react in a specific situation. The answers of the person are transformed e.g. into Personality Descriptor Mark-Up Language and the respective transformed information is stored in the situation-specific set of data fields. Alternatively, interactions of the person with one or more applications may be analyzed automatically in order to obtain situation-specific personal information. For instance, e-mails or voice communications of the person are analyzed and respective situation-specific information is stored in the second set of data fields. Thus, individual reactions from the past can be regarded in the second set of data fields. Hence, the two different sets of data fields (first or basic set and second or situation specific set) are filled with information units from two different data sources (first and second data source). The first set of data fields may be filled with information from the personality model and the second set of data fields (situation-specific set) may be filled with personal information units obtained from a situation-specific analysis.

According to a further embodiment, the schema comprises an extendable set of data fields (third set of data fields), which a user is allowed to fill, whereas the user is not allowed to fill the basic set and/or the situation-specific set of data fields with personal information units. In other words, there are one or two sets of data fields, which are not variable for a user and the third set of data fields is variable for the user (third data source, different from first and second data source). Thus, the user can specify the schema for his requirements. However, the fundamental personal information (basic set and situation-specific set) remain unchanged. The access to the different sets can be regulated with rights. For instance, an administrator has the right to access the basic set and the situation-specific set, and another user does not have such access. The extendable set of data fields, however, can be entered by the user himself and may be used for personal information related to user-specific situations. Specifically, the user may have the situation "machine maintenance under pressure". The user can store information about a personal reaction in this specific situation in the extendable set of data fields.

In another embodiment at least a part of the personal information units required for filling at least a part of the data fields are acquired by an INFJ (introverts, intuitives, feelers, judgers) or Rorschach tests. There also may be used other personality tests.

According to a further embodiment the person interacts with the application and based thereon the application automatically gathers additional personal information units, which are filled into the schema or used for varying at least one of the personal information units of the schema. This means that the application itself, which is using the schema, can vary it. This is a kind of evolution. For example, the application may have an internal module or may have access to an external module which is capable of adding new personal information to the extendable set of data fields. The module for adding such new personal information may be an Add New Personality Trait Module. In a further embodiment, the additional personal information units are filled into the extendable set of data fields of the schema or they are used for varying at least one of the personal information units of the extendable set of data fields of the schema. This means that the extendable set of data fields may not only be filled up, but information already stored in the schema may be changed. Thus, the schema may be a dynamical set of personal information.

In still a further embodiment a first version of the schema not affected by the additional personal information units and a second version of the schema affected by the additional personal information units are provided simultaneously for the application. This means that a basic version of the schema is provided simultaneously with a user-specific version of the schema. Furthermore, also two or more different user-specific schemas may be provided simultaneously. This results in the advantage, that two users can use the same profile of a user account (e.g. media account, shopping platform account) .

According to a further embodiment, the application and the schema are integrated in a single application system. Thus, the schema is plugged into the application system. The advantage of this is that the application of the application system can immediately access the schema. Moreover, the schema is continuously available for the application.

In another embodiment the automatic transmission of the respective one of the personal information units of the person to the application from the schema is performed by an application programming interface (API). In this case, the API is responsible for the transmission of the personal information. Optionally, the API can preprocess the personal information units.

In a specific embodiment the application programming interface transforms personal information units intended for the transmission into natural language. Thus, the output of the API is natural language, which may be understood better by users.

The above-described object is also solved by a system for providing a personal information unit to an application, comprising a first processing unit designed for providing a schema including a set of data fields, each field being provided for a field specific type of information about a person, a second processing unit designed for filling at least a part of the data fields with one or more respective personal information units of the person, a third processing unit designed for automatically asking the first processing unit for one of the field specific types of information about the person and a forth processing unit designed for automatically transmitting a respective one of the personal information units of the person from the first processing unit to the third processing unit, the field specific type of which personal information unit is asked for by the third processing unit.

The system includes several processing units. Each processing unit may include a separate hardware processor and/or a separate data memory. However, the processing units may also be grouped together in one or more groups each having one single processor and/or one single data memory.

The same advantages and variation possibilities discussed above in connection with the inventive method also apply for the inventive system analogously. Specifically, the described method features can be realized as functional features in the system.

Furthermore, there is provided a computer program (product) comprising instructions which, when the program is executed by the system described above, causes the system to carry out (the steps of) the described method.

In this document use cases, implementations, applications, workflows etc. are summarized as applications.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

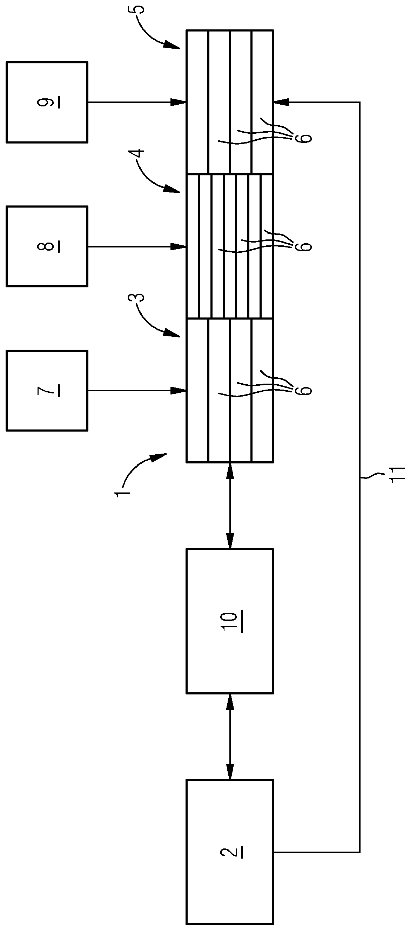

The present invention will now be described in more detail in connection with the following FIG 1.

FIG 1 shows a schematic block diagram for providing personal information.

The following embodiments represent favorable examples of the present invention.

The challenge is that the created user profiles are mostly not standardized. The user data is stored in large databases and can be queried via APIs (application programming interface) based on certain parameters. On one hand, this makes the data accessible and easy to use, on the other hand though, this also means the user profile is not exactly pluggable to create an overall user persona.

Therefore, a methodology and architecture is proposed to tackle the challenge of creating personas from scratch to populate applications with digital companions or agents and enabling them to autonomously conclude appropriate behavioral responses or visual representation. These challenges in a meaningful and extendable manner enabling user profiles to not only be created but also ported across applications while giving an option to applications to further evolve the profile and a choice to share that evolution.

Specifically, a Personality Descriptor Markup Language (PDML) can be proposed. A standardized set of fields in a descriptor format, which can be extended based on the user requirements. The PDML will also come with extendable interfaces using which the "Personality Description" can be plugged in to use cases, implementations, and applications.

According to FIG 1 a schema 1 is used for providing personal information for an application 2. The schema 1 may also be abbreviated as PDML. The schema 1 includes several components, namely a basic set 3, a situation specific set 4 and an optional extendable set 5. Each set includes a plurality of data fields 6. The number of data fields 6 in each set 3, 4, 5 may be equal or alternatively different from each other. In each data field a specific type of information can be stored. Usually, the types are different from each other.

The basic set 3 of data fields 6 can also be called personality schema (PS). The basic set may include predefined data fields 6, which provide a high-level perspective of what the person is. Respective personal information units can be extrapolated from personality models such as Myers-Briggs or even as basic as zodiac signs.

The situation-specific set 4 of data fields 6 can also be called Situation-Specific Response (SSR). The respective personal information units may include the archetypical situations and how a person has reacted to these situations in the past. SSR may be derived from feeding person backstory. This could be in form of a standard questionnaire or observation, for example by observing conversations over e-mail or chats or voice communication.

The optional extendable set 5 of data fields 6 may also be called Extendable Behavior Schema Fields (EBSF). Other than the fundamental sets 3 and 4 an application or organization can add additional behavior schema. For example, an organization with specific tasks, like machine maintenance under pressure, might want to measure and assess how a technician would react under high pressure machine failure. The EBSF can be created using an Add New Personality Trait (ANPT) module.

Each set 3, 4, 5 of data fields 6 may be fed from a separate data source 7, 8, 9. The basic set 3, for example, may receive personal information units from a first data source 7. The first data source may be based on a personality model. The situation-specific set 4 may receive personal information units from the second data source 8. The second data source 8 may be based on a questionnaire or an analyzing algorithm (e.g. for analyzing conversations). The extendable set 5, which is optional, may receive personal information units from the third data source 9. The third data source 9 is usually separated from the first data source 7 and the second data source 8. For instance, the first and second data sources 7 and 8 are provided by a first organization and the third data source 9 is provided by a second organization.

In a use case of personalizing application 2, application 2 may ask schema 1 for a specific type of information. The type of information may be assigned to one of the data fields 6 in any of the sets 3, 4, 5. The specific data field 6 assigned to the type of information asked for is read out by the application 2.

The communication between application 2 and schema 1 may be performed by an interface 10. This interface 10 may be a Get Personality Interface (GPI). The GPI may provide personality traits in a query-able fashion.

The person, the personal information of which is stored in schema 1, may interact with application 2. Such interactions can be analyzed by the application and respective additional personality information may be obtained. This personality information may be transferred back to schema 1. In FIG 1 a specific arrow 11 shows this communication between application 2 and extendable set 5. However, this communication can also be performed via the channel between application 2 and schema 1 including the optional interface 10.

In the following, concrete embodiments are described in more detail.

There may be three major steps in the usage of Personality Description Markup Language, i.e. schema 1: creation and population of user specific PDML, evolution of PDML and plugging in of PDML.
1. Creation and Population of user specific PDML:
   Initial user personality information can be directly filled in the basic set 3 of data fields 6 by an organization. E.g. INFJ tests, Rorschach tests or personality tests may be performed. Based on this information, an initial cumulative personality of the user is created.
   Then the organization can start filling the situation specific set 4 (SSRs). This can be for example, but not limited to
      i. How would the person/user react in the "happy case" (best state scenario) of a current use case.
      ii. What are the edge cases and the user response to those situations.
   The schema 1 (PDML) can be as specific to a use case as needed. In fact, it is better to define the PDML in a concrete and use case specific environment. An evolution of the PDML may take care of making it generic.
   Based on SSR, for instance, a new extendable set 5 (EBSF) can be created. SSRs, by default, cover some standard use cases, but the organization or user is encouraged to create new EBSFs. These EBSFs can, but not necessarily have to, be shared with the overall PDML tool. If organizations choose to share the EBSFs, the PDML generator can learn from it and provide more specific SSRs to next set of users.
2. Evolution of schema/PDML:
   Once the organization has defined the initial set of schemas in PDML, both default ones and the EBSFs, the PDML is ready to be plugged in and integrated to e.g. a workflow. The user behavior and interaction can be plugged in using the ANPT module.
   As the user interacts with the system/application, or more user related data is available, the ANPT module (Add New Personality Trait) uses that to create new extendable sets 5, i.e. EBSFs (Extendable Behavior Schema Fields), and keeps populating more user traits in the PDML. For example, the initial definition of the user behavior defines user (i.e. person) in a certain way. As the user interacts with an application within metaverse, if the user is elated based on some feature or event, and frustrated by other, the ANPT observes that and creates new EBSFs for that. The new EBSFs feed into the overall PDML.
   The organization may have a choice to use the constantly evolving PDML, or request a new version from time to time, and chose to revert to a certain version. This becomes important, for example, when two users use the same profile. Imagine two users using the same Netflix account or amazon account. Their behavior pattern will be different. The shopping pattern, choice of movies, most enjoyed, and most prolific moments will vary. In case of this information becoming available, an organization can choose to go back to a version of PDML which was unadulterated. This is also useful in case the account gets compromised.
3. Plugging in of schema 1/PDML:
   The PDML exposes the traits and behaviors based on APIs (Application Programming Interface). Based on e.g. organization requirement, the API can be a NLP (Natural Language Processing) based API where questions posed in conversational language will be responded as the user would.
   On the other hand, APIs would also provide query capability in form of structured queries so that applications can be designed to mimic and support user behavior.

The user can choose to purchase/create and maintain the control of their own personality using the PDML. And when the user joins a new website, they can choose to provide their PDML to the website via a "bring your own key" access policy. The organization can query the personality and behavior using the APIs, but the control remains with the user.

## Claims

1. Method of providing a personal information unit to an application (2),
**characterized by**
- providing a schema (1) including a basic set (3) of data fields (6), each data field (6) being provided for a field specific type of information about a person,
- filling at least a part of the data fields (6) with one or more respective personal information units of the person,
- automatically asking the schema (1) for one of the field specific types of information about the person by the application (2) and
- automatically transmitting a respective one of the personal information units of the person to the application (2) from the schema (1), the field specific type of which personal information unit is asked for.

2. Method according to claim 1, wherein the application (2) includes a digital assistant and a reaction of the digital assistant to an input of the person depends on the one personal information unit received by the digital assistant from the schema (1).

3. Method according to claim 1 or 2, wherein the personal information units required for filling at least a part of the basic set (3) of data fields (6) are obtained from one or more personality models.

4. Method according to one of the preceding claims, wherein the schema (1) comprises an situation specific set (4) of data fields (6), and the situation specific set (4) of data fields (6) is at least partly filled by personal information units gathered by an automatic questionnaire or an automatic analysis of interactions of the person with the application (2) and/or another application.

5. Method according to one of the preceding claims, wherein the schema (1) comprises an extendable set of data fields, which a user is allowed to fill, whereas the user is not allowed to fill the basic set and/or the situation specific set with personal information units.

6. Method according to one of the preceding claims, wherein at least a part of the personal information units required for filling at least a part of the data fields (6) are acquired by an INFJ or Rorschach test.

7. Method according to one of the preceding claims, wherein the person interacts with the application (2) and based thereon the application (2) automatically gathers additional personal information units, which are filled into the schema (1) or used for varying at least one of the personal information units of the schema (1).

8. Method according to claims 5 and 7, wherein the additional personal information units are filled into the extendable set (5) of data fields (6) of the schema (1) or used for varying at least one of the personal information units of the extendable set (5) of data fields (6) of the schema (1).

9. Method according to claim 7 or 8, wherein a first version of the schema (1) not affected by the additional personal information units and a second version of the schema (1) affected by the additional personal information units are provided simultaneously for the application (2).

10. Method according to one of the preceding claims, wherein the application (2) and the schema (1) are integrated in a single application system.

11. Method according to one of the preceding claims, wherein the automatic transmission of the respective one of the personal information units of the person to the application (2) from the schema (1) is performed by an application programming interface.

12. Method according to claim 11, wherein the application programming interface transforms personal information units intended for the transmission into natural language.

13. System for providing a personal information unit to an application (2),
**characterized by**
- a first processing unit designed for providing a schema (1) including a basic set (3) of data fields (6), each data field (6) being provided for a field specific type of information about a person,
- a second processing unit designed for filling at least a part of the data fields (6) with one or more respective personal information units of the person,
- a third processing unit designed for automatically asking the first processing unit for one of the field specific types of information about the person and
- a forth processing unit designed for automatically transmitting a respective one of the personal information units of the person from the first processing unit to the third processing unit, the field specific type of which personal information unit is asked for by the third processing unit.

14. Computer program comprising instructions which, when the program is executed by the system of claim 13, cause the system to carry out the method of one of the claims 1 to 12.
